# EUROPÄISCHE PATENTSCHRIFT

(11) **EP 2 094 795 B1**
(45) Veröffentlichungstag und Bekanntmachung des Hinweises auf die Patenterteilung: **04.12.2013**
(21) Anmeldenummer: 07820185.2
(22) Anmeldetag: 13.09.2007
(51) Int. Cl.: B05D 7/14, C08G 18/42, C09D 5/08, C09D 175/06, C09D 167/00, B05D 3/02, C08L 61/28

(54) **VERFAHREN ZUR BESCHICHTUNG VON METALLBÄNDERN**
METHOD FOR COATING METAL BANDS
PROCÉDÉ DE REVÊTEMENT DE BANDES MÉTALLIQUES

(30) Priorität: 29.12.2006 DE 102006062041
(43) Veröffentlichungstag der Anmeldung: 02.09.2009
(73) Patentinhaber: Evonik Degussa GmbH, 45128 Essen (DE)
(72) Erfinder: KOSCHABEK, René, 68259 Mannheim (DE); BARTMANN, Martin, 45657 Recklinghausen (DE); BRAND, Thorsten, 45772 Marl (DE); SCHUBERT, Andreas, 45481 Mülheim an der Ruhr (DE)
(86) Internationale Anmeldenummer: PCT/EP2007/059643
(87) Internationale Veröffentlichungsnummer: WO 2008/080644

(56) Entgegenhaltungen:
- EP-A- 1 479 709
- US-A1- 2004 081 850

## Beschreibung

Die vorliegende Erfindung betrifft die Verwendung von verzweigten amorphen Makropolyolen auf Polyesterbasis zur Beschichtung von Metallbändern, Verfahren zur Beschichtung von Metallbändern sowie die damit erhaltenen beschichteten Metallbänder.

### Hintergrund der Erfindung

Beschichtungen von Metallbändern werden verwendet, um aufgerollte Metallbleche, z. B. aus Aluminium oder Stahl in sehr kurzer Zeit, also ökonomisch, mit einer hochwertigen Beschichtung zu versehen. Gegenüber anderer Beschichtungsmethoden, z. B. Sprühen, hat diese Methode erhebliche Vorteile. So werden hier qualitativ hochwertige einheitliche Beschichtungen mit hoher Ausbeute und wenig Emissionen erzielt.

Das Beschichten von Metallbändern ist ein kontinuierliches Verfahren. Um am Ende eines Metallbandes das Weiterlaufen des Beschichtungsprozesses zu gewährleisten, werden so genannte Akkumulatoren eingesetzt, aus denen in der Zeit, in der das nächste Metallband angesetzt wird, das Band für einen begrenzten Zeitraum weiter gespeist werden kann. Die Metallbänder werden im Allgemeinen vorher gereinigt, vorbehandelt und beidseitig mit Primern versehen.

Zum Beschichten von Metallbändern werden flüssige, hitzehärtbare Beschichtungsmittel eingesetzt, die aus einer Lösung eines hydroxylgruppenenthaltenden Bindemittels, z. B. einem Polyester, und einem geblockten Polyisocyanat und/oder einem Melaminharz und deren Derivate in einem organischen Lösungsmittel bestehen. Als weitere Bestandteile seien Pigmente und weitere Additive genannt.

Wichtige Eigenschaften für Beschichtungen von Metallbändern sind solche wie Bewitterungs-, Hydrolyse-, Chemikalien- und Kratzbeständigkeit, ein hoher Glanz, Härte und Flexibilität. Letztere beeinflusst stark die Haftungseigenschaften der Beschichtung, wenn das Substrat nach dem Lackierprozess einem oder mehreren Verformungsschritten wie z. B. dem Tiefziehen unterzogen wird, wie das für viele Bauteile von Nöten ist.

Die Bewitterungsbeständigkeit ist vor allem für derartige Bauteile entscheidend, deren Oberfläche direkter Sonneneinstrahlung und sonstigen Wettereinflüssen ausgesetzt werden, dazu zählen u. a. Verkehrsschilder, Fassadenelemente, Garagentore, Regenrinnen und Fahrzeugteile usw.

Grundsätzlich ist die Substrathaftung besser bei weicheren und flexibleren Bindemitteln, auf der anderen Seite ist die Bewitterungsbeständigkeit und Haltbarkeit bei härteren Bindemitteln besser.

Neben all diesen Eigenschaften kommt einem Faktor beim Beschichten von Metallbändern eine ganz erhebliche Rolle zu, nämlich der Wirtschaftlichkeit. So ist es erstrebenswert, pro Zeiteinheit eine möglichst lange Strecke Metallband zu beschichten. Limitierende Größen dabei sind die Verweilzeit der Metallbänder im Ofen bzw. die erforderliche Ofentemperatur, damit eine vollständige Vernetzung der Lacke erreicht wird. Es ist allgemeiner Wissenstand, dass sich die Ofenverweilzeiten derart beschichteter Bleche verkürzen, d. h. die Vernetzungsreaktivität der eingesetzten Bindemittel steigt, je kleiner die molare Masse der eingesetzten Polymere ist, d. h. je höher die Dichte an vernetzungsfähigen Gruppen z. B. Hydroxylgruppen ist. Einer willkürlichen Senkung des Molekulargewichts und damit einhergehenden hohen Vernetzungsdichte steht aber eine für die Beschichtung von Metallbändern inakzeptable Versprödung der fertigen Lacke gegenüber, insbesondere wenn Melaminverbindungen als Vernetzer verwendet werden.

Kürzere Einbrennzeiten können ebenso durch erhöhte Ofentemperaturen erreicht werden. Neben den damit verbundenen nicht zu erstrebenden höheren Energiekosten können beliebig hohe Temperaturen mit vielen Substraten nicht realisiert werden. So genannte BH-Stähle ("bake hardening") beispielsweise härten bei höheren Temperaturen aus und können aus diesem Grund keinem Verformungsschritt mehr unterzogen werden.

Um diese Eigenschaftsanforderungen an Wirtschaftlichkeit und Lackqualität zu gewährleisten, ist es Stand der Technik (WO 2004/039902), Mischungen eines verzweigten, relativ niedermolekularen mit einem höhermolekularen überwiegend linearen Bindemittel zur Flexibilisierung zusammen mit einem Vernetzer in Beschichtungen von Metallbändern zu verwenden. Mit derartigen Rezepturen kann gewährleistet werden, dass der Lack eine genügend hohe Vernetzungsreaktivität im Ofen besitzt.

Die Notwendigkeit, zwei unterschiedliche Bindemittel herstellen zu müssen, und schließlich auch im geeigneten Verhältnis zur Formulierung der Lacke abzumischen, ist gleichbedeutend mit erheblichen wirtschaftlichen Nachteilen gegenüber einer Lackrezeptur, die auf einem einzigen Bindemittel beruht.

Aus diesen Gründen war es Aufgabe der vorliegenden Erfindung, ein Verfahren und eine Beschichtung von Metallbändern zu entwickeln, die zu o. g. Lackeigenschaften führt und gleichzeitig eine genügend hohe Vernetzungsreaktivität bietet, um möglichst geringe Ofenverweilzeiten bei moderater Vernetzermenge zu ermöglichen.

Es ist allgemein bekannt, dass die Vernetzungsreaktivität von OH-terminierten Polyestern mit steigender OH-Zahl zunimmt. Allerdings liefern Polyester mit hohen OH-Zahlen, d. h. kleinen Molekulargewichten, spröde Lacke, die für die Beschichtung von Metallbändern aufgrund mangelnder Flexibilität nicht verwendbar sind.

Überraschenderweise wurde festgestellt, dass verzweigte Polyester mit Gehalten an trifunktionellem Verzweiger zwischen 10 und 25 mol-%, bezogen auf die Alkoholkomponente, deren Molekulargewicht zwischen 2500 und 4500 g/mol liegt, ein für die Beschichtung von Metallbändern genügend ausgewogenes Verhältnis zwischen hoher Vernetzungsreaktivität und Flexibilität aufweisen. Derartige verzweigte Polyester sind in EP 1479709 beschrieben.

Gegenstand der vorliegenden Erfindung ist demgemäß die Verwendung von verzweigten amorphen Makropolyolen auf Polyesterbasis gemäß Anspruch 1

zur Beschichtung von Metallbändern. Die erfindungsgemäß eingesetzten amorphen, verzweigten Makropolyole auf Polyesterbasis enthalten als Ausgangssäurekomponente gemäß Auspruch 1 1,2-Cyclohexandicarbonsäure, Phthalsäure und Adipinsäure.

Jede Säurekomponente kann teilweise oder vollständig aus Anhydriden und/oder niedermolekularen Alkylestern, bevorzugt Methylestern und/oder Ethylestern, bestehen.

Als mindestens trifunktionelle Alkoholkomponente können z. B. Trimethylolpropan, Trimethylolethan, 1,2,6-Trihydroxahexaerythrit, Glycerin, Trishydroxyethylisocyanurat, Pentaerytrit, Sorbit, Xylit und/oder Mannit verwendet werden, in Mengen von 10 bis 25 mol-%, bezogen auf die Alkoholkomponente.

Daneben kann die Alkoholkomponente weitere lineare und/oder verzweigte, aliphatische und/oder cycloaliphatische und/oder aromatische Diole und/oder Polyole enthalten. Bevorzugt werden als zusätzliche Alkohole Ethylenglykol, 1,2- und/oder 1,3-Propandiol, Diethylen-, Dipropylen-, Triethylen-, Tetraethylenglykol, 1,2- und/oder 1,4-Butandiol, 1,3-Butylethylpropandiol, 1,3-Methylpropandiol, 1,5-Pentandiol, Bisphenol A, B, C, F, Norbornylenglykol, 1,4-Benzyldimethanol und -ethanol, 2,4-Dimethyl-2-ethylhexan-1,3-diol, Cyclohexandimethanol, Dicidol, Hexandiol, Neopentylglycol in Mengen von 75 bis 90 mol-%, bezogen auf die Alkoholkomponente, eingesetzt.

Eingesetzte Säuren sind 1,2-Cyclohexandicarbonsäure, Phthalsäure und/oder Adipinsäure in folgender Zusammensetzung:
92 - 100 mol-% 1,2-Cyclohexandicarbonsäure und 0 - 8 mol-% Phthalsäure und/oder Adipinsäure oder
60 - 70 mol-% Phthalsäure und 30 - 40 mol-% Adipinsäure.

Bevorzugte Diole sind z. B. Ethylenglykol (0 - 40 mol-%), 2,2'-Dimethylpropan-1,3-diol (35 - 80 mol-%), 1,6-Hexandiol (0 - 15 mol-%), Trimethylolpropan (10 - 25 mol-%.)

Die verzweigten, amorphen Makropolyole können eine Säurezahl kleiner 10,0, besonders bevorzugt zwischen 0 und 5 mg KOH/g sowie eine Hydroxylzahl zwischen 0 und 200 mg KOH/g, bevorzugt zwischen 10 und 150, besonders bevorzugt zwischen 30 und 100 mg KOH/g aufweisen.

Die resultierenden zahlengemittelten Molekulargewichte Mₙ liegen von 2500 bis 4500 g/mol, vorzugsweise bei 3000 bis 4000.

Die Säurezahl wird bestimmt nach DIN EN ISO 2114.
Unter der Säurezahl (SZ) versteht man diejenige Menge Kaliumhydroxid in mg, die zur Neutralisation der in einem Gramm Substanz enthaltenen Säuren erforderlich ist. Die zu untersuchende Probe wird in Dichlormethan gelöst und mit 0,1 N methanolischer Kalilauge gegen Phenolphthalein titriert.

Die Hydroxylzahl wird bestimmt nach DIN 53240-2.
Bei diesem Verfahren wird die Probe mit Essigsäureanhydrid in Gegenwart von 4-Dimethylaminopyridin als Katalysator umgesetzt, wobei die Hydroxylgruppen acetyliert werden. Dabei entsteht pro Hydroxylgruppe ein Molekül Essigsäure, während die anschließende Hydrolyse des überschüssigen Essigsäureanhydrids zwei Moleküle Essigsäure liefert. Der Verbrauch an Essigsäure wird titrimetrisch aus der Differenz zwischen Hauptwert und einem parallel durchzuführenden Blindwert ermittelt.

Das Molekulargewicht wird bestimmt mittels Gelpermeationschromatographie (GPC). Charakterisierung der Proben erfolgte in Tetrahydrofuran als Eluent nach DIN 55672-1.
Mₙ (UV) = Zahlenmittleres Molgewicht (GPC, UV-Detektion), Angabe in g / mol
M_{w} (UV) = Massenmittleres Molgewicht (GPC, UV-Detektion), Angabe in g / mol

Die erfindungsgemäß erhaltenen beschichteten Metallbänder zeigen vorteilhafte Eigenschaften, insbesondere zeigen die Beschichtungen bei der T-Biegeprüfung (T-Bend) Werte ≤ 2.0.

### Zusammenfassung der Erfindung

Gegenstand der Erfindung ist die Verwendung von verzweigten amorphen Makropolyolen auf Polyesterbasis zur Beschichtung von Metallbändern. Das eingesetzte Beschichtungsmittel ist folgendermaßen gekennzeichnet:
Es enthält ein verzweigtes, amorphes Makropolyol auf Polyesterbasis, das erhalten werden kann durch Umsetzung von
   92-100 mol-% 1,2-Cyclohexandicarbonsäure und 0-8 mol-% Phthalsäure und/oder Adipinsäure oder
   60-70 mol-% Phthalsäure und 30-40 mol-% Adipinsäure und
mindestens einer Alkoholkomponente aus
1) 10 bis 25 mol-% eines mindestens trifunktionellen Alkohols, und
2) 75 bis 90 mol-% mindestens eines weiteren Diols,
in Gegenwart eines Vernetzungsreagenz, gekennzeichnet durch
- ein Mₙ von 2500 - 4500 g/mol,
- eine OH-Zahl von 0 - 200 mg KOH/g, bevorzugt von 20 - 150 mg KOH/g und besonders bevorzugt von 30 - 100 mg KOH/g,
- eine Säurezahl von 0 bis 10 mg KOH/g, und besonders bevorzugt von 0 - 5 mg KOH/g.

Das Vernetzungsreagenz ist z. B. ein Polyisocyanat und/oder ein Melaminharz und/oder deren Derivate.

Zusätzlich können die amorphen Makropolyole auf Polyesterbasis bei der Beschichtung zusammen mit 0 bis 70 Gew.-%, bezogen auf die Gesamtzusammensetzung, Hilfs- und Zusatzstoffen, insbesondere mit Inhibitoren, Wasser und/oder organischen Lösemittel, Neutralisationsmitteln, grenzflächenaktiven Substanzen, Sauerstoff- und/oder Radikalfängern, Katalysatoren, Lichtschutzmitteln, Farbaufhellern, Photosensibilisatoren, Thixotropiermitteln, Hautverhinderungsmitteln, Entschäumem, Antistatika, Eindickungsmitteln, thermoplastischen Additiven, Farbstoffen, Pigmenten, Brandschutzausrüstungen, internen Trennmitteln, Füllstoffen und/oder Treibmitteln, eingesetzt werden.

Hinsichtlich der zu beschichtenden Metalle gibt es keine Einschränkungen, insbesondere ist das Metall der Metallbänder ausgewählt auf der Gruppe umfassend Aluminium, Stahl und Zink.

Ebenfalls Gegenstand der vorliegenden Erfindung sind Verfahren zur Beschichtung von Metallbändern, wobei das Beschichtungsmaterial aus einem verzweigten amorphen Makropolyol auf Polyesterbasis besteht, erhalten durch Umsetzung von 92-100 mol-% 1,2-Cyclohexandicarbonsäure und 0-8 mol-% Phthalsäure und/oder Adipinsäure oder 60-70 mol-% Phthalsäure und 30-40 mol-% Adipinsäure und und mindestens einer Alkoholkomponente aus 10 bis 25 mol-% eines mindestens trifunktionellen Alkohols, und 75 bis 90 mol-% mindestens eines weiteren Alkohols, bezogen auf die Alkoholkomponente, in Gegenwart eines Vernetzungsreagenz, wobei der Polyester
- ein Mₙ von 2500 - 4500 g/mol,
- eine OH-Zahl von 0 - 200 mg KOH/g und
- eine Säurezahl von 0 bis 10 mg KOH/g,
aufweist, wobei das Beschichtungsmaterial auf den Metallbändern bei Einbrenntemperaturen von weniger als 220 °C (Peak Metal Temperature = PMT) eingebrannt wird.

Die daraus erhaltenen Beschichtungen von Metallbändern zeigen in der T-Biegeprüfung (T-Bend) Werte ≤ 2.0.

Die erfindungsgemäß eingesetzten verzweigten, amorphen Makropolyole auf Polyesterbasis werden nach bekannten Verfahren (siehe Dr. P. Oldring, Resins for Surface Coatings, Volume III, veröffentlicht von Sita Technology, 203 Gardiness House, Bromhill Road, London SW 184JQ, England 1987) durch (halb)kontinuierliche oder diskontinuierliche Veresterung der Ausgangssäuren und -alkohole in einstufiger oder mehrstufiger Fahrweise hergestellt.

Die Herstellung der erfindungsgemäß eingesetzten amorphen Makropolyole auf Polyesterbasis wird bevorzugt in einer Inertgasatmosphäre bei 150 bis 270 °C, bevorzugt bei 180 bis 260 °C, besonders bevorzugt bei 200 bis 250 °C durchgeführt. Als Inertgas können Stickstoff oder Edelgase, insbesondere Stickstoff eingesetzt werden. Das Inertgas weist einen Sauerstoffgehalt von weniger als 50 ppm, insbesondere weniger als 20 ppm, auf. Nach Abspaltung des Großteils der theoretisch berechneten Wassermenge kann mit Vakuum gearbeitet werden. Wahlweise kann auch unter Zusatz von Katalysatoren zur Beschleunigung der (Poly-) Kondensationsreaktion und/oder Schleppmitteln zur Abtrennung des Reaktionswassers gearbeitet werden. Typische Katalysatoren sind Organotitan- oder -zinnverbindungen, wie z. B. Tetrabutyltitanat oder Dibutylzinnoxid. Die Katalysatoren können wahlweise zu Beginn der Reaktion mit den anderen Ausgangsstoffen oder erst später während der Reaktion chargiert werden. Als Schleppmittel können z. B. Toluol oder diverse SolventNaphtha^{®}-Qualitäten dienen.

Die erfindungsgemäß beschichteten Metallbänder sind ebenfalls Gegenstand der vorliegenden Erfindung und können in fachmännischer Weise beliebig eingesetzt werden, insbesondere im Bau und in der Architektur (beispielsweise Innenanwendungen, Dach, Wand), im Transportwesen, bei Hausgeräten und bei der Weiterverarbeitung, beispielsweise Stanzen oder Lochen.

Auch ohne weitere Ausführungen wird davon ausgegangen, dass ein Fachmann die obige Beschreibung im weitesten Umfang nutzen kann. Die bevorzugten Ausführungsformen und Beispiele sind deswegen lediglich als beschreibende, keinesfalls als in irgendeiner Weise limitierende Offenbarung aufzufassen.

Nachfolgend wird die vorliegende Erfindung anhand von Beispielen näher erläutert. Alternative Ausführungsformen der vorliegenden Erfindung sind in analoger Weise erhältlich.

### Beispiel 1

| **mol-%** | **Gew.-%** | **Rohstoff** |
|---|---|---|
| Säurekomponente | | |
| 100 | 59, 9 | 1,2-Cyclohexandicarbonsäureanhydrid |
| **100** | | **Summe Säurekomponente** |
| | | |

| Alkoholkomponente | | |
|---|---|---|
| 30 | 7,5 | Neopentylglykol |
| 39 | 10,3 | Monoethylenglykol |
| 15 | 13,2 | 1,6-Hexandiol |
| 16 | 9,1 | Trimethylolpropan |
| **100** | | **Summe Alkoholkomponente** |

59,9 Teile 1,2-Cyclohexandicarbonsäureanhydrid werden mit 7,5 Teilen Neopentylglykol, 10,3 Teilen Monoethylenglykol, 13,2 Teilen 1,6-Hexandiol und 9,1 Teilen Trimethylolpropan bei max. 250 °C in Stickstoffatmosphäre zur Reaktion gebracht bis eine Säurezahl unter 1 mg KOH/g und eine Hydroxylzahl von 55 KOH/g erreicht ist. Der Polyester wird nach Abkühlung 65 % in Solvesso^{®} 150 / Butylglykol (3:1) gelöst.

### Analytische Kennzahlen:

OHZ = 55 mg KOH·g⁻¹, SZ = 0,4 mg KOH·g⁻¹, Mₙ = 3.600 g·mol⁻¹

### Beispiel 2

| **mol%** | **Gew.-%** | **Rohstoff** |
|---|---|---|
| Säurekomponente | | |
| 100 | 55,2 | 1,2-Cyclohexandicarbonsäureanhydrid |
| **100** | | **Summe Säurekomponente** |
| | | |

| Alkoholkomponente | | |
|---|---|---|
| 77,5 | 32,6 | Neopentylglykol |
| 22,5 | 12,2 | Trimethylolpropan |
| **100** | | **Summe Alkoholkomponente** |

55,2 Teile 1,2-Cyclohexandicarbonsäureanhydrid werden mit 32,6 Teilen Neopentylglykol und 12,2 Teilen Trimethylolpropan bei max. 250 °C in Stickstoffatmosphäre zur Reaktion gebracht bis eine Säurezahl von 5 mg KOH/g erreicht ist. Der Polyester wird nach Abkühlung 65 % in Solvesso^{®} 150 / Butylglykol (3:1) gelöst.

### Analytische Kennzahlen:

OHZ = 95 mg KOH·g⁻¹, SZ = 5 mg KOH·g⁻¹, Mₙ = 2500 g·mol⁻¹

### Beispiel 3

| **mol-%** | **Gew.-%** | **Rohstoff** |
|---|---|---|
| Säurekomponente | | |
| 70 | 34,6 | Phthalsäure |
| 30 | 15,1 | Adipinsäure |
| **100** | | **Summe Säurekomponente** |
| | | |

| Alkoholkomponente | | |
|---|---|---|
| 60,0 | 30,2 | Neopentylglykol |
| 25 | 12,5 | Monoethylenglykol |
| 15 | 7,6 | Trimethylolpropan |
| **100** | | **Summe Alkoholkomponente** |

34,6 Teile Phthalsäure und 15,1 Teile Adipinsäure werden mit 30,2 Teilen Neopentylglykol, 12,5 Teilen Monoethylenglykol und 7,6 Teilen Trimethylolpropan bei max. 250 °C in Stickstoffatmosphäre zur Reaktion gebracht bis eine Säurezahl unter 1 mg KOH/g und eine Hydroxylzahl von 35 KOH/g erreicht ist. Der Polyester wird nach Abkühlung 65 % in Solvesso^{®} 150 / Butylglykol (3:1) gelöst.

### Analytische Kennzahlen:

OHZ = 35 mg KOH·g⁻¹, SZ = 0,6 mg KOH·g⁻¹, Mₙ = 4100 g·mol⁻¹

### Vergleichsbeispiel A

| **mol-%** | **Gew.-%** | **Rohstoff** |
|---|---|---|
| Säurekomponente | | |
| 100 | 50 | 1,2-Cyclohexandicarbonsäureanhydrid |
| **100** | | **Summe Säurekomponente** |
| | | |

| Alkoholkomponente | | |
|---|---|---|
| 97,5 | 48,8 | Neopentylglykol |
| 2.5 | 1,2 | Trimethylolpropan |
| **100** | | **Summe Alkoholkomponente** |

50 Teile 1,2-Cyclohexandicarbonsäureanhydrid werden mit 48,8 Teilen Neopentylglykol und 1,2 Teilen Trimethylolpropan bei max. 250 °C in Stickstoffatmosphäre zur Reaktion gebracht bis eine Säurezahl unter 5 mg KOH/g und eine Hydroxylzahl von 47 mg KOH/g erreicht ist. Der Polyester wird nach Abkühlung 65 % in Solvesso^{®} 100 gelöst.

### Analytische Kennzahlen:

OHZ = 47 mg KOH·g⁻¹, SZ = 4,0 mg KOH·g⁻¹, Mₙ = 2100 g·mol⁻¹

### Vergleichsbeispiel B

| **mol-%** | **Gew.-%** | **Rohstoff** |
|---|---|---|
| Säurekomponente | | |
| 100 | 53,5 | 1,2-Cyclohexandicarbonsäureanhydrid |
| **100** | | **Summe Säurekomponente** |
| | | |

| Alkoholkomponente | | |
|---|---|---|
| 77,5 | 33,8 | Neopentylglykol |
| 22,5 | 12,7 | Trimethylolpropan |
| **100** | | **Summe Alkoholkomponente** |

53,5 Teile 1,2-Cyclohexandicarbonsäureanhydrid werden mit 33,8 Teilen Neopentylglykol und 12,7 Teilen Trimethylolpropan bei max. 250 °C in Stickstoffatmosphäre zur Reaktion gebracht bis eine Säurezahl von 5 mg KOH/g und eine Hydroxylzahl von 128 mg KOH/g erreicht ist. Der Polyester wird nach Abkühlung 65 % in Solvesso^{®} 150 / Butylglykol (3:1) gelöst.

### Analytische Kennzahlen:

OHZ = 128 mg KOH·g⁻¹, SZ = 5 mg KOH·g⁻¹, Mₙ = 2400 g·mol⁻¹

### Vergleichsbeispiel C

| **mol-%** | **Gew.-%** | **Rohstoff** |
|---|---|---|
| Säurekomponente | | |
| 100 | 50 | 1,2-Cyclohexandicarbonsäureanhydrid |
| **100** | | **Summe Säurekomponente** |
| | | |

| Alkoholkomponente | | |
|---|---|---|
| 74 | 36,8 | Neopentylglykol |
| 26 | 13,2 | Trimethylolpropan |
| **100** | | **Summe Alkoholkomponente** |

50 Teile 1,2-Cyclohexandicarbonsäureanhydrid werden mit 36,8 Teilen Neopentylglykol und 13,2 Teilen Trimethylolpropan bei max. 250 °C in Stickstoffatmosphäre zur Reaktion gebracht bis eine Säurezahl von 5 mg KOH/g und eine Hydroxylzahl von 110 mg KOH/g erreicht ist. Der Polyester wird nach Abkühlung 65 % in Solvesso^{®} 100 gelöst.

### Analytische Kennzahlen:

OHZ = 110 mg KOH·g⁻¹, SZ = 5,1 mg KOH·g⁻¹, Mₙ = 2200 g·mol⁻¹

### Lackrezepturen

| | **Teile** |
|---|---|
| Polyesterlösung 65% | 43,8 |
| TiO₂ 2310 | 31,7 |
| Hexamethoxymethylmelamin¹ | 7,5 |
| p-Toluolsulfonsäure² | 0,4 |
| Verlaufshilfsmittel³ | 0,8 |
| Butylglykolacetat | 8,6 |
| DBE | 7,2 |

1 z. B. *Cymel 303* von Cytec Industries Inc.;. Dieser Vernetzer zeichnet sich dadurch aus, dass seine reaktiven NH₂-Gruppen durch Methoxylgruppen blockiert sind, die bei erhöhten Temperaturen, die im Coil-Coating-Verfahren üblich sind, wieder abgespalten werden und die Reaktion mit den Polyestern stattfinden kann.
2 z. B. *Nacure 2500* von King Industries, Inc.; Dieser saure Katalysator (chemisch blockiert) ist notwendig, um die Reaktion zwischen Melaminkomponente und Polyesterkomponente zu ermöglich.
3 z. B. *Byk 350* von Byk-Chemie; Acrylatadditiv zur Verbesserung des Verlaufes und Erhöhung des Glanzes. Das Additiv gibt den Lacken eine lange Spritznarbe und vermeidet Krater. Die Oberflächenspannung wird nur in geringem Maße reduziert; Überlackierbarkeit und Zwischenschichthaftung werden nicht beeinträchtigt.

### Lacktechnische Prüfung

| | **Lack Beispiel 1** | **Lack Beispiel 2** | **Lack Beispiel 3** | **Lack Vergleich A** | **Lack Vergleich B** | **Lack Vergleich C** |
|---|---|---|---|---|---|---|
| **MEK¹ Doppelhübe** | > 100 | > 100 | > 100 | > 100 | > 100 | > 100 |
| **PMT² [°C]** | 209 | 216 | 188 | 232 | 209 | 204 |
| **T-bend³** | 1,5 | 1,5 | 1,0 | 1,0 | 3,0 | 3,0 |

### Methoden:

1 ECCA Test Method T11: (Diese Prüfmethode ermöglicht es, die Vernetzung eines reaktiven Lacksystems unter den zugrundeliegenden Einbrennbedingungen zu überprüfen.
   Durchführung:
   Das beschichtete "Blech", bestehend aus Aluminium oder verzinktem Stahl o. ä. wird mit einem in Methylethylketon (MEK) getränkten Wattebausch (mit 1 oder 2 Kg Gewicht (MEK-Hammer)) chemisch/mechanisch belastet. Es handelt sich um geradlinige Doppelhübe, bei denen es zu einem chemischen Angriff der Beschichtung kommen kann. In der Regel soll eine vollständig durchgehärtete Beschichtung 100 Doppelhübe (DH) unbeschadet überstehen. Bei nicht ausreichender Durchhärtung kommt es nach den ersten Doppelhüben, ggf. erst später (< 100DH) zu einer Auflösung des Lackes. Es werden die entsprechend erreichten Doppelhübe ganzzahlig angegeben und sind ein Maß z. B. für die Durchhärtung oder die Vernetzungsdichte oder die Reaktivität eines Lacksystems.)
2 Peak Metal Temperature (Während des Einbrennvorgangs maximal gemessene Temperatur auf der Blechoberfläche)
3 ECCA Test Method T5: Zweck dieser Arbeitsanweisung ist die Beurteilung der Dehnbarkeit und der Haftfestigkeit von Beschichtungen bei Biegebeanspruchung. Der kleinste Biegeradius, der eine rissfreie Biegung der Probe erlaubt, bestimmt den Widerstand bei einer 180°-Biegung.
   Durchführung:
   Ermittlung des T-bends einer unbelasteten Probe
   Die Probeplatten müssen eben und frei von Verformungen (z. B. Knickwellen) sein.
   Die Prüfbleche werden mit der Beschichtung nach außen von Hand mit Hilfe der Abkantbank um ca. 180° vorgebogen.
   Dazu wird das maximal 10 cm breite Blech mit der lackierten Seite nach hinten in den kleinst-möglichen Spalt einer Biegebank gesteckt.
   Anschließend wird das vorgebogene Blech in einem Schraubstock fest zusammengedrückt, so dass kein Luftspalt mehr bleibt.
   Die Biegeschulter wird mit einer 10-fach vergrößernden Lupe auf Risse geprüft.
   Danach wird über die gesamte Breite der Biegeschulter ein Tesafilmstreifen fest angedrückt, ruckartig abgerissen und auf anhaftende Lackpartikel untersucht.
   Ermittelt wird der kleinste Biegeradius (0 T - 0,5 T - 1 T usw.), bei dem der Lackfilm keine Risse aufweist (T-Bend-Risse), bzw. am Tesafilm keine Lackablösung (T-Bend-Haftung) feststellbar ist.

## Patentansprüche

1. Verwendung von verzweigten amorphen Makropolyolen auf Polyesterbasis, erhalten durch Umsetzung von
92-100 mol-% 1,2-Cyclohexandicarbonsäure und 0-8 mol% Phthalsäure und/oder Adipinsäure oder
60-70 mol-% Phthalsäure und 30-40 mol-% Adipinsäure und
mindestens einer Alkoholkomponente aus 10 bis 25 mol-% eines mindestens trifunktionellen Alkohols, und 75 bis 90 mol% mindestens eines weiteren Alkohols, bezogen auf die Alkoholkomponente, in Gegenwart eines Vernetzungsreagenz, wobei der Polyester
• ein Mₙ von 2500 - 4500 g/mol, bestimmt nach DIN 55672-1
• eine OH-Zahl von 0 - 200 mg KOH/g, bestimmt nach DIN 53240-2 und
• eine Säurezahl von 0 bis 10 mg KOH/g, bestimmt nach DIN EN ISO 2114, aufweist, zur Beschichtung von Metallbändern.

2. Verwendung gemäß Anspruch 1, **dadurch gekennzeichnet, dass** als trifunktionelle Alkoholkomponente Trimethylolpropan, Trimethylolethan, 1,2,6-Trihydroxahexaerythrit, Glycerin, Trishydroxyethylisocyanurat, Pentaerytrit, Sorbit, Xylit und/oder Mannit eingesetzt wird.

3. Verwendung gemäß Anspruch 1 oder 2, **dadurch gekennzeichnet, dass** als weitere Alkoholkomponente lineare und/oder verzweigte, aliphatische und/oder cycloaliphatische und/oder aromatische Diole und/oder Polyole eingesetzt werden.

4. Verwendung gemäß Anspruch 3, **dadurch gekennzeichnet, dass** die weitere Alkoholkomponente ausgewählt ist aus Ethylenglykol, 1,2- und/oder 1,3-Propandiol, Diethylen-, Dipropylen-, Triethylen-, Tetraethylenglykol, 1,2- und/oder 1,4-Butandiol, 1,3-Butylethylpropandiol, 1,3-Methylpropandiol, 1,5-Pentandiol, Bisphenol A, B, C, F, Norbomylenglykol, 1,4-Benzyldimethanol und -ethanol, 2,4-Dimethyl-2-ethylhexan-1,3-diol, Cyclohexandimethanol, Dicidol, Hexandiol.

5. Verwendung gemäß einem oder mehreren der Ansprüche 1 bis 4, **dadurch gekennzeichnet, dass** als Vernetzungsreagenz Polyisocyanat und/oder einem Melaminharz und/oder deren Derivate eingesetzt wird.

6. Verwendung gemäß einem oder mehreren der Ansprüche 1 bis 5, **dadurch gekennzeichnet, dass** die verzweigten amorphen Makropolyole auf Polyesterbasis zusammen mit Hilfs- und Zusatzstoffen eingesetzt werden.

7. Verwendung gemäß Anspruch 6, **dadurch gekennzeichnet, dass** die Hilfs- und Zusatzstoffe ausgewählt sind aus der Gruppe umfassend Inhibitoren, Wasser und/oder organische Lösemittel, Neutralisationsmittel, grenzflächenaktive Substanzen, Sauerstoff- und/oder Radikalfänger, Katalysatoren, Lichtschutzmittel, Farbaufheller, Photosensibilisatoren, Thixotropiermittel, Hautverhinderungsmittel, Entschäumer, Antistatika, Eindickungsmittel, thermoplastische Additive, Farbstoffe, Pigmente, Brandschutzausrüstungen, interne Trennmittel, Füllstoffe und/oder Treibmittel.

8. Verwendung gemäß einem oder mehreren der Ansprüche 1 bis 7, **dadurch gekennzeichnet, dass** das Metall der Metallbänder ausgewählt ist aus der Gruppe umfassend Aluminium, Stahl und Zink.

9. Verfahren zur Beschichtung von Metallbändern, wobei das Beschichtungsmaterial aus einem verzweigten amorphen Makropolyol auf Polyesterbasis besteht, erhalten durch Umsetzung von
92-100 mol-% 1,2-Cyclohexandicarbonsäure und 0-8 mol-% Phthalsäure und/oder Adipinsäure oder
60-70 mol-% Phthalsäure und 30-40 mol-% Adipinsäure und
mindestens einer Alkoholkomponente aus 10 bis 25 mol-% eines mindestens trifunktionellen Alkohols, und 75 bis 90 mol-% mindestens eines weiteren Alkohols, bezogen auf die Alkoholkomponente, in Gegenwart eines Vernetzungsreagenz, wobei der Polyester
• ein Mₙ von 2500 - 4500 g/mol, bestimmt nach DIN 55672-1
• eine OH-Zahl von 0 - 200 mg KOH/g, bestimmt nach DIN 53240-2 und
• eine Säurezahl von 0 bis 10 mg KOH/g, bestimmt nach DIN EN ISO 2114, aufweist, wobei das Beschichtungsmaterial auf den Metallbändern bei Einbrenntemperaturen von weniger als 220 °C (PMT) eingebrannt wird.

10. Verfahren gemäß Anspruch 10, **dadurch gekennzeichnet, dass** bis zu 70 Gew.-% weitere Hilfs- und Zusatzstoffe eingesetzt werden.

11. Verfahren gemäß Anspruch 10, **dadurch gekennzeichnet, dass** die Hilfs- und Zusatzstoffe ausgewählt sind aus der Gruppe umfassend Inhibitoren, Wasser und/oder organische Lösemittel, Neutralisationsmittel, grenzflächenaktive Substanzen, Sauerstoff- und/oder Radikalfänger, Katalysatoren, Lichtschutzmittel, Farbaufheller, Photosensibilisatoren, Thixotropiermittel, Hautverhinderungsmittel, Entschäumer, Antistatika, Eindickungsmittel, thermoplastische Additive, Farbstoffe, Pigmente, Brandschutzausrüstungen, interne Trennmittel, Füllstoffe und/oder Treibmittel.

12. Beschichtete Metallbänder, erhalten nach einem Verfahren gemäß einem oder mehreren der Ansprüche 9 bis 11.

## Claims

1. Use of a branched, amorphous, polyester-based macropolyol obtained by reacting
92-100 mol% of 1,2-cyclohexanedicarboxylic acid and 0-8 mol% of phthalic acid and/or adipic acid or
60-70 mol% of phthalic acid and 30-40 mol% adipic acid and
at least one alcohol component comprising 10 to 25 mol% of an at least trifunctional alcohol and 75 to 90 mol% of at least one further alcohol, based on the alcohol component, in the presence of a crosslinking reagent, the polyester having
• an Mₙ of 2500-4500 g/mol, determined in accordance with DIN 55672-1
• an OH number of 0-200 mg KOH/g, determined in accordance with DIN 53240-2 and
• an acid number of 0 to 10 mg KOH/g, determined in accordance with DIN EN ISO 2114,
for coating a metal strip.

2. Use according to Claim 1, **characterized in that** trimethylolpropane, trimethylolethane, 1,2,6-trihydroxyhexaerythritol, glycerol, trishydroxyethyl isocyanurate, pentaerythritol, sorbitol, xylitol and/or mannitol is used as trifunctional alcohol component.

3. Use according to Claim 1 or 2, **characterized in that** linear and/or branched, aliphatic and/or cycloaliphatic and/or aromatic diols and/or polyols are used as further alcohol component.

4. Use according to Claim 3, **characterized in that** the further alcohol component is selected from ethylene glycol, 1,2- and/or 1,3-propanediol, diethylene glycol, dipropylene glycol, triethylene glycol, tetraethylene glycol, 1,2- and/or 1,4-butanediol, 1,3-butylethylpropanediol, 1,3-methylpropanediol, 1,5-pentanediol, bisphenol A, B, C, F, norbornylene glycol, 1,4-benzyldimethanol and -ethanol, 2,4-dimethyl-2-ethylhexane-1,3-diol, cyclohexanedimethanol, Dicidol, hexanediol.

5. Use according to one or more of Claims 1 to 4, **characterized in that** polyisocyanate and/or a melamine resin and/or derivative thereof is used as crosslinking reagent.

6. Use according to one or more of Claims 1 to 5, **characterized in that** the branched, amorphous, polyester-based macropolyol is used together with auxiliaries and additives.

7. Use according to Claim 6, **characterized in that** the auxiliaries and additives are selected from the group consisting of inhibitors, water and/or organic solvents, neutralizing agents, surface-active substances, oxygen scavengers and/or free-radical scavengers, catalysts, light stabilizers, colour brighteners, photosensitizers, thixotropic agents, anti-skinning agents, defoamers, antistats, thickeners, thermoplastic additives, dyes, pigments, flame retardants, internal release agents, fillers and/or blowing agents.

8. Use according to one or more of Claims 1 to 7, **characterized in that** the metal of the metal strip is selected from the group consisting of aluminium, steel and zinc.

9. Method of coating a metal strip, the coating material being composed of a branched, amorphous, polyester-based macropolyol obtained by reacting
92-100 mol% of 1,2-cyclohexanedicarboxylic acid and 0-8 mol% of phthalic acid and/or adipic acid or
60-70 mol% of phthalic acid and 30-40 mol% adipic acid and
at least one alcohol component comprising 10 to 25 mol% of an at least trifunctional alcohol and 75 to 90 mol% of at least one further alcohol, based on the alcohol component, in the presence of a crosslinking reagent, the polyester having
• an Mₙ of 2500-4500 g/mol, determined in accordance with DIN 55672-1
• an OH number of 0-200 mg KOH/g, determined in accordance with DIN 53240-2 and
• an acid number of 0 to 10 mg KOH/g, determined in accordance with DIN EN ISO 2114,
the coating material on the metal strip being baked at baking temperatures of less than 220°C (PMT).

10. Method according to Claim 9, **characterized in that** up to 70% by weight of further auxiliaries and additives are used.

11. Method according to Claim 10, **characterized in that** the auxiliaries and additives are selected from the group consisting of inhibitors, water and/or organic solvents, neutralizing agents, surface-active substances, oxygen scavengers and/or free-radical scavengers, catalysts, light stabilizers, colour brighteners, photosensitizers, thixotropic agents, anti-skinning agents, defoamers, antistats, thickeners, thermoplastic additives, dyes, pigments, flame retardants, internal release agents, fillers and/or blowing agents.

12. Coated metal strips obtained by a method according to one or more of Claims 9 to 11.

## Revendications

1. Utilisation de macropolyols ramifiés amorphes à base de polyester, obtenus par mise en réaction de
92-100 % en moles d'acide 1,2-cyclohexanedicarboxylique et 0-8 % en moles d'acide phtalique et/ou d'acide adipique ou
60-70 % en moles d'acide phtalique et 30-40 % en moles d'acide adipique et
d'au moins un composant alcool constitué de 10 à 25 % en moles d'un alcool au moins trifonctionnel et de 75 à 90 % en moles d'au moins un autre alcool, par rapport au composant alcool, en présence d'un réactif de réticulation, le polyester présentant
• une Mₙ de 2 500 - 4 500 g/mole, déterminée selon DIN 55672-1,
• un indice OH de 0 - 200 mg de KOH/g, déterminé selon DIN 53240-2 et
• un indice d'acide de 0 à 10 mg de KOH/g, déterminé selon DIN EN ISO 2114,
pour l'enduction de rubans métalliques.

2. Utilisation selon la revendication 1, **caractérisée en ce qu'**on utilise comme composant alcool trifonctionnel le triméthylolpropane, le triméthylol-éthane, le 1,2,6-trihydroxahexaérythritol, le glycérol, l'isocyanurate de trishydroxyéthyle, le pentaérythritol, le sorbitol, le xylitol et/ou le mannitol.

3. Utilisation selon la revendication 1 ou 2, **caractérisée en ce qu'**on utilise comme autre composant alcool des diols et/ou polyols linéaires et/ou ramifiés, aliphatiques et/ou cycloaliphatiques et/ou aromatiques.

4. Utilisation selon la revendication 3, **caractérisée en ce que** l'autre composant alcool est choisi parmi l'éthylèneglycol, le 1,2- et/ou 1,3-propanediol, le diéthylène-, dipropylène-, triéthylène-, tétraéthylèneglycol, le 1,2- et/ou 1,4-butanediol, le 1,3-butyléthylpropanediol, le 1,3-méthylpropanediol, le 1,5-pentanediol, le bisphénol A, B, C, F, le norbornylèneglycol, le 1,4-benzyldiméthanol et le 1,4-benzyldiéthanol, le 2,4-diméthyl-2-éthylhexane-1,3-diol, le cyclohexanediméthanol, le dicidol, l'hexanediol.

5. Utilisation selon une ou plusieurs des revendications 1 à 4, **caractérisée en ce qu'**on utilise comme réactif de réticulation un polyisocyanate et/ou une résine mélamine et/ou leurs dérivés.

6. Utilisation selon une ou plusieurs des revendications 1 à 5, **caractérisée en ce qu'**on utilise les macropolyols ramifiés amorphes à base de polyester conjointement avec des adjuvants et additifs.

7. Utilisation selon la revendication 6, **caractérisée en ce que** les adjuvants et additifs sont choisis dans le groupe comprenant des inhibiteurs, l'eau et/ou des solvants organiques, des agents de neutralisation, des substances tensioactives, des capteurs d'oxygène et/ou de radicaux, des catalyseurs, des photoprotecteurs, des agents éclaircissant la teinte, des photosensibilisants, des agents de thixotropie, des agents antipeaux, des antimousses, des agents antistatiques, des épaississants, des additifs thermoplastiques, des colorants, des pigments, des agents de protection contre l'incendie, des agents de démoulage internes, des charges et/ou des agents d'expansion.

8. Utilisation selon une ou plusieurs des revendications 1 à 7, **caractérisée en ce que** le métal des rubans métalliques est choisi dans le groupe comprenant l'aluminium, l'acier et le zinc.

9. Procédé pour l'enduction de rubans métalliques, dans lequel le matériau de revêtement consiste en un macropolyol ramifié amorphe à base de polyester, obtenu par mise en réaction de
92-100 % en moles d'acide 1,2-cyclohexanedicarboxylique et 0-8 % en moles d'acide phtalique et/ou d'acide adipique ou
60-70 % en moles d'acide phtalique et 30-40 % en moles d'acide adipique et
d'au moins un composant alcool constitué de 10 à 25 % en moles d'un alcool au moins trifonctionnel et de 75 à 90 % en moles d'au moins un autre alcool, par rapport au composant alcool, en présence d'un réactif de réticulation, le polyester présentant
• une Mₙ de 2 500 - 4 500 g/mole, déterminée selon DIN 55672-1,
• un indice OH de 0 - 200 mg de KOH/g, déterminé selon DIN 53240-2 et
• un indice d'acide de 0 à 10 mg de KOH/g, déterminé selon DIN EN ISO 2114,
dans lequel le matériau de revêtement est appliqué à chaud sur les rubans métalliques, à des températures de cuisson de moins de 220 °C (PMT).

10. Procédé selon la revendication 9, **caractérisé en ce qu'**on utilise jusqu'à 70 % en poids d'autres adjuvants et additifs.

11. Procédé selon la revendication 10, **caractérisé en ce que** les adjuvants et additifs sont choisis dans le groupe comprenant des inhibiteurs, l'eau et/ou des solvants organiques, des agents de neutralisation, des substances tensioactives, des capteurs d'oxygène et/ou de radicaux, des catalyseurs, des photoprotecteurs, des agents éclaircissant la teinte, des photosensibilisants, des agents de thixotropie, des agents antipeaux, des antimousses, des agents antistatiques, des épaississants, des additifs thermoplastiques, des colorants, des pigments, des agents de protection contre l'incendie, des agents de démoulage internes, des charges et/ou des agents d'expansion.

12. Rubans métalliques revêtus, obtenus conformément à un procédé selon une ou plusieurs des revendications 9 à 11.
